# EUROPÄISCHE PATENTSCHRIFT

(11) **EP 2 601 467 B1**
(45) Veröffentlichungstag und Bekanntmachung des Hinweises auf die Patenterteilung: **16.11.2016**
(21) Anmeldenummer: 11733846.7
(22) Anmeldetag: 18.07.2011
(51) Int. Cl.: F26B 13/10, F26B 23/00

(54) **VORRICHTUNG ZUR WÄRMEBEHANDLUNG EINER TEXTILEN WARENBAHN**
APPARATUS FOR THE HEAT TREATMENT OF A WEB OF TEXTILE MATERIAL
DISPOSITIF DE TRAITEMENT THERMIQUE D'UNE BANDE DE MATIÈRE TEXTILE

(30) Priorität: 02.08.2010 DE 102010033033
(43) Veröffentlichungstag der Anmeldung: 12.06.2013
(73) Patentinhaber: A. Monforts Textilmaschinen GmbH & Co. KG., 41061 Mönchengladbach (DE)
(72) Erfinder: BAUM, Gottfried, 41812 Erkelenz (DE)
(74) Vertreter: Frese Patent
(86) Internationale Anmeldenummer: PCT/EP2011/062257
(87) Internationale Veröffentlichungsnummer: WO 2012/016814

(56) Entgegenhaltungen:
- DE-A1- 3 151 074
- US-A- 4 092 100
- US-A- 4 270 282
- US-A- 5 915 340
- US-B1- 6 321 462

## Beschreibung

Die Erfindung betrifft eine Vorrichtung zur Wärmebehandlung einer textilen Warenbahn umfassend ein Gehäuse, Mittel zum Führen der Warenbahn in dem Gehäuse, Mittel zum Aufblasen von erwärmtem Behandlungsgas auf die Warenbahn, wobei ein erster Kanal zum Zuführen von Frischluft, die zumindest Teil des Behandlungsgases ist, und wobei ein zweiter Kanal zum Ableiten von Abgas angeordnet ist, und mindestens ein Wärmerad zur Vorwärmung der Frischluft mittels des Abgases.

Solche Vorrichtungen sind an sich bekannt. Sie sind z.B. als Spannrahmen oder Hotflue ausgebildet.

Ein Spannrahmen ist in den meisten Fällen in eine Vielzahl von Kammern unterteilt, auch Felder genannt. Die Warenbahn ist in einer im Wesentlichen horizontalen Ebene längs durch die Kammern geführt, wobei sie an ihren Längsrändern zwischen zwei Ketten eingespannt ist. Auf die Warenbahn wird Behandlungsgas, z.B. Umluft aufgeblasen. Solche Spannrahmen sind z.B. aus der DE 298 23 493 U oder der DE 103 33 483 A1 bekannt. Hier wird das Behandlungsgas im Wesentlichen als Umluft geführt; Frischluft wird mindestens einer Kammer zugeführt, und Abluft wird abgeleitet.

Aus der EP 132 498 B1 ist ein Verfahren zur Trocknung laufender Warenbahnen in einem Umlufttrockner bekannt, bei dem als Zuluft Frischluft in einen vorderen Teil des Trockners zugeführt und Abluft aus einem hinteren Teil des Trockners abgeführt wird. Die Frischluftzufuhr kann durch einen Eintrittsschlitz für die Warenbahn und die Abluftabfuhr im letzten Trocknerfeld oder davor erfolgen. Es ist auch beschrieben, die Frischluft durch die Abluft direkt oder indirekt vorzuwärmen. Dadurch kann der Temperaturunterschied zwischen der zugeführten Frischluft und der Behandlungsluft in den Behandlungskammern verringert werden.

Eine indirekte Vorwärmung der Frischluft mittels der Abluft erfolgt in einem Wärmetauscher. Dieser kann z.B. ein so genanntes Wärmerad sein, wie es in der DE 35 11 950 C2 für einen Wärmetausch Abluft zu Wasser beschrieben ist.

Die US 6,321,462 B1 beschreibt einen Trockner für eine Warenbahn mit integrierter regenerativer Nachverbrennung der Abluft, wobei ein Wärmerad als Regenerator verwendet wird.

Eine Vorwärmung der Frischluft mittels Abluft ist nicht offenbart. Aus der US 4,092,100 A ist ein Trockner für lackierte Flächen bekannt, bei dem Frischluft mittels Wärmerädern vorgewärmt werden kann. Die Wärmeräder mit allen Zu- und Ableitungen sind außerhalb eines Gehäuses des Trockners angeordnet.

Die DE 31 51 074 A beschreibt einen Trockner für Warenbahnen, und Vorrichtung zur Wärmebehandlung von textilen Warenbahnen, umfassend ein Gehäuse, Mittel zum Führen der Warenbahn in dem Gehäuse, Mittel zum Aufblasen von erwärmtem Behandlungsgas auf die Warenbahn, wobei ein erster Kanal zum Zuführen von Frischluft, die zumindest Teil des Behandlungsgases ist, und wobei ein zweiter Kanal zum Ableiten von Abgas angeordnet ist. Ein Wärmetauscher zur Vorwärmung der Frischluft mittels des Abgases, wobei der Wärmetauscher unmittelbar an warme Seiten der Kanäle für die Frischluft und für das Abgas angeschlossen ist und wobei die warmen Seiten der Kanäle ausschließlich innerhalb des Gehäuses geführt sind. Der Wärmetauscher ist z.B. als Röhrenwärmetauscher innerhalb eines Gehäuses angeordnet.

Die US 4,270,282 A beschreibt einen Wäschetrockner mit integriertem Wärmerad.

Die bekannten Wärmetauscher zur Vorwärmung, insbesondere die Wämmeräder, sind oberhalb der Vorrichtung zur Wärmebehandlung außerhalb des Gehäuses angeordnet. Entsprechend sind auch die erforderlichen Leitungen außerhalb des Gehäuses geführt. Dies führt zu entsprechenden Rohrleitungen, die isoliert sein müssen, um zu große Wärmeverluste zu vermeiden. Das ist mit entsprechendem Aufwand verbunden; zusätzliche Wärmeverluste sind nicht vollkommen zu vermeiden. Weiterhin wird die erforderliche Bauhöhe für die Vorrichtung insgesamt wesentlich erhöht, was ebenfalls einen erheblichen Aufwand für die Bauwerke bedeutet, in denen die Vorrichtung aufzustellen ist.

Es ist daher die Aufgabe der Erfindung, eine Vorrichtung zur Wärmebehandlung einer textilen Warenbahn zu schaffen, bei der Leitungen für eine indirekte Vorwärmung von Frischluft mittels Abluft ohne wesentlichen zusätzlichen Aufwand realisiert sind, und wo eine Bauhöhe der Vorrichtung nicht oder nicht wesentlich größer ist als bei Vorrichtungen ohne die Vorwärmung.

Die Aufgabe ist durch die Merkmale des Anspruchs 1 gelöst. Das Wärmerad ist unmittelbar an warme Seiten der Kanäle für die Frischluft und für das Abgas angeschlossen, wobei die warmen Seiten der Kanäle ausschließlich innerhalb des Gehäuses geführt sind. Mit warmer Seite des Kanals ist der Teil definiert, durch den ein Medium mit einer höheren von zwei unterschiedlichen Temperaturen geführt ist; für den ersten Kanal ist dies in Fließrichtung des Mediums (hier Frischluft) hinter dem Wärmerad und für den zweiten Kanal mit der Abluft ist dies vor dem Wärmerad. Die Führung innerhalb des Gehäuses bedeutet, dass außer einem Kamin keine Rohrleitungen für die Führung der Frischluft und die Abluft außerhalb des Gehäuses angeordnet sind. Da das Gehäuse wärmeisoliert ist und im Betrieb innerhalb des Gehäuses Temperaturen von 150°C bis 250°C vorherrschen, ist eine Isolierung der Kanäle nicht erforderlich. Je nach Führung der Kanäle wirken diese als zusätzliche Wärmeisolierung für das Gehäuse, wobei die vorgewärmte Frischluft weitere Wärme aufnehmen kann. Wärmeverluste werden so insgesamt verringert. Die Kanäle können so angeordnet und ausgebildet sein, dass das Gehäuse nicht oder zumindest nicht wesentlich größer ist als bei außerhalb des Gehäuses geführten Kanälen. Eine Reinigung der Vorrichtung ist vereinfacht, weil weniger Außenflächen vorhanden sind, die alle im Wesentlichen glatt sind. Ein Aussehen der Vorrichtung wird insgesamt verbessert.

Die Unteransprüche betreffen die vorteilhafte Ausgestaltung der Erfindung.

In einer alternativen Ausgestaltung der Erfindung ist jeder der Kanäle in zwei beabstandete Teilkanäle unterteilt, die an den Enden, wo der erste Kanal und der zweite Kanal benachbart sind, U-förmig verbunden sind. Die Teilkanäle erlauben eine Führung der Kanäle derart, dass sie einfach an die vorhandenen Raumverhältnisse und technischen Erfordernisse angepasst werden können. Die Teilkanäle sind zweckmäßigerweise mit rechteckigem Querschnitt in oberen inneren Ecken des Gehäuses angeordnet, wodurch Umluft innerhalb des Gehäuses günstig geführt werden kann. Die Verbindung weist ebenfalls einen rechteckigen Querschnitt auf und erlaubt die Ausbildung einer genügend großen Austrittsfläche des Kanals zu dem Wärmerad. Die Teilkanäle und die Verbindung sind in der Draufsicht U-förmig.

In einer weiteren Alternative ist das Wärmerad unmittelbar an den Verbindungen der Kanäle angeordnet, wobei die Verbindungen zu dem Wärmerad hin offen und dichtend an dessen Umhausung angeschlossen sind. Hierdurch sind keine Zwischenleitungen erforderlich. Die Verbindungen sind entsprechend der Größe des Wärmerads dimensioniert, so dass ein direkter und einfacher Übergang zwischen dem Wärmerad und den Kanälen gewährleistet ist.

In einer weiteren Alternative ist der erste Kanal einer ersten Kammer der Vorrichtung zugeordnet. Da die Frischluft der ersten Kammer zugeführt und die Abluft zumindest von einer letzten Kammer abgeleitet wird, ergibt sich so eine günstige Leitungsführung.

In einer bevorzugten Alternative ist das Wärmerad oberhalb der Warenbahn im Bereich einer Decke des Gehäuses angeordnet. Hierdurch sind Wartungs- und Reinigungsarbeiten besonders einfach durchzuführen.

Alternativ dazu ist das Wärmerad unterhalb der Warenbahn innerhalb des Gehäuses angeordnet.

In einer weiteren Alternative ist das Wärmerad um eine senkrechte Welle drehbar gelagert. Dies erfordert eine nur geringe Bauhöhe.

Die Erfindung wird anhand der schematischen Zeichnung weiter erläutert. Es zeigen
Figur 1 einen vertikalen Längsschnitt durch einen Spannrahmen,
Figur 2 einen horizontalen Längsschnitt durch den Spannrahmen,
Figur 3 einen Längsschnitt durch den Spannrahmen im Bereich eines Wärmerads als Detail,
Figur 4 einen Längsschnitt durch eine alternative Anordnung des Wärmerads in dem Spannrahmen und
Figur 5 einen Querschnitt gemäß der Figur 4.

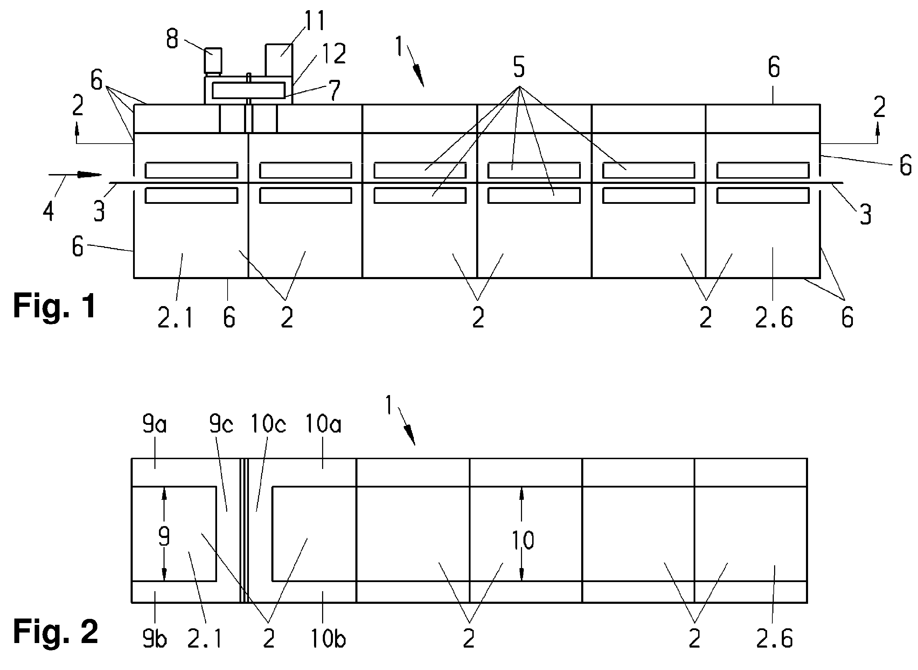

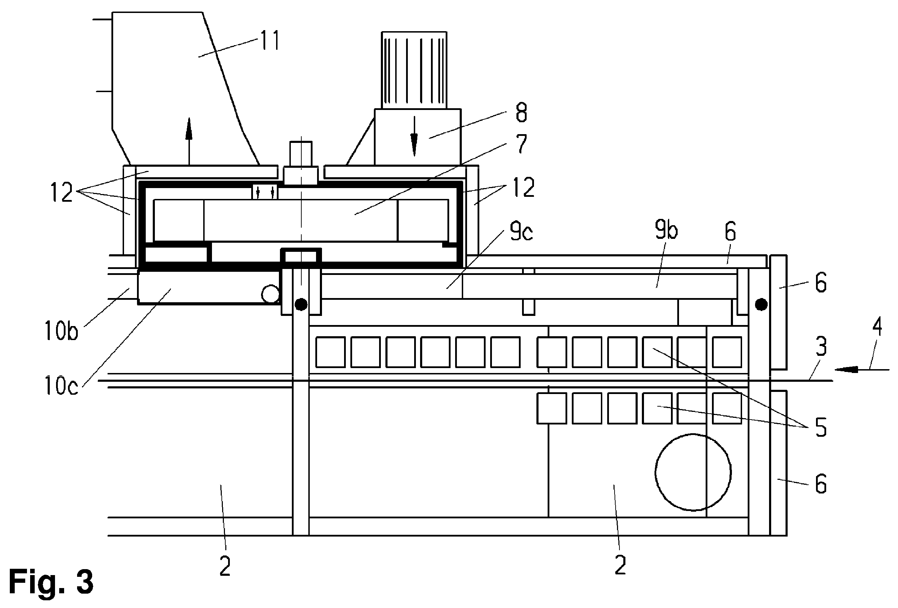

Wie aus den Figuren 1 bis 3 ersichtlich ist bei einem ersten Ausführungsbeispiel eine Vorrichtung zur Wärmebehandlung hier als Spannrahmen 1 ausgebildet. Dieser ist aus einer Vielzahl von hier sechs Kammern 2 zusammengesetzt, die im Wesentlichen gleichartig aufgebaut sind. Durch den Spannrahmen 1 ist horizontal eine textile Warenbahn 3 in Richtung des Pfeils 4 transportierbar und hierbei mittels Transportketten und Kluppen geführt. Jede der Kammern 2 umfasst Mittel zum Aufblasen von Behandlungsgas auf die Warenbahn 3, mindestens bestehend aus Düsenkästen 5, die unterhalb und oberhalb der Warenbahn 3 angeordnet sind, einem Umluftgebläse, Mitteln zum Erwärmen des Behandlungsgases und Mitteln zum Leiten und Regeln des im Kreislauf geführten Behandlungsgases (Umluft).

Der Spannrahmen 1 ist von einem Gehäuse 6 weitestgehend umschlossen; an einer Eingangsseite des Spannrahmens 1 ist ein Eingangsschlitz für die Warenbahn 3 und an einer Ausgangsseite ein Ausgangsschlitz angeordnet.

Der Spannrahmen 1 umfasst weiterhin Mittel zum Zuführen von Frischluft sowie Mittel zum Ableiten von Abluft. Zum Wärmen der Frischluft mittels der Abluft ist ein Wärmetauscher in Form eines Wärmerads 7 angeordnet.

Die Mittel zum Zuführen der Frischluft umfassen ein Frischluftgebläse 8, dessen Saugseite mit Umgebungsluft in Verbindung steht. Eine Druckseite des Frischluftgebläses 8 ist an das Wärmerad 7 und dann an einen ersten Kanal 9 angeschlossen. Der erste Kanal 9 ist in einem Deckenbereich einer in Transportrichtung ersten der Kammern 2.1 angeordnet. Der erste Kanal 9 ist in zwei erste Teilkanäle 9a, 9b mit rechteckigem Querschnitt unterteilt, die sich parallel zu der Transportrichtung erstrecken und an hinteren Enden durch eine erste Verbindung 9c mit rechteckigem Querschnitt verbunden sind. Die ersten Teilkanäle 9a, 9b und die erste Verbindung 9c bilden in der Draufsicht ein U, der erste Kanal 9 ist also insgesamt in der Draufsicht U-förmig. Die erste Verbindung 9c ist teilweise nach oben offen; das Gehäuse 6, genauer eine Decke des Gehäuses 6, weist in der Draufsicht deckungsgleich mit der Öffnung der ersten Verbindung 9c eine durchgehende erste Aussparung auf, so dass die Frischluft von dem Frischluftgebläse 8 durch das Wärmerad 7 in den ersten Kanal 9 förderbar ist.

Die Mittel zum Ableiten der Abluft umfassen einen zweiten Kanal 10, der sich über die Länge des Spannrahmens 1 mit Ausnahme der ersten Kammer 2.1 erstreckt. Der zweite Kanal 10 ist mittelbar an eine Saugseite eines Abluftgebläses 11 angeschlossen, dessen Druckseite mit einem Kamin verbunden ist. Der zweite Kanal 10 ist in zwei zweite Teilkanäle 10a, 10b mit rechteckigen Querschnitten unterteilt, die sich parallel zu der Transportrichtung erstrecken und an vorderen Enden durch eine zweite Verbindung 10c mit rechteckigem Querschnitt verbunden sind. Die zweiten Teilkanäle 10a, 10b und die zweite Verbindung 10c bilden in der Draufsicht ein hochgestrecktes U, der zweite Kanal 10 ist also insgesamt in der Draufsicht U-förmig. Die zweite Verbindung 10c ist nach oben offen; das Gehäuse 6 weist in der Draufsicht deckungsgleich mit der Öffnung der zweiten Verbindung 10c eine durchgehende zweite Aussparung auf, so dass die Abluft von dem Abluftgebläse 11 aus dem zweiten Kanal 10 durch das Wärmerad 7 in den Kamin förderbar ist. Damit aus jeder der Kammern 2 die Abluft abgezogen werden kann, sind in den zweiten Teilkanälen 10a, 10b entsprechende Absaugöffnungen zu den Kammern 2 eingelassen. Eine Größe dieser Absaugöffnungen ist mittels Klappen oder Schiebern veränderbar.

Über den Öffnungen der Verbindungen 9c, 10c ist das antreibbare Wärmerad 7 so auf dem Gehäuse 6 angeordnet, dass es um eine vertikale Achse drehbar ist. Eine Umhausung 12 des Wärmerads 7 ist mit seiner unteren Seite an die Verbindungen 9c, 10c derart dicht angeschlossen, dass Ströme der Frischluft und der Abluft durch die entsprechenden Kanäle 9, 10, das Wärmerad 7 und die Gebläse 8, 11 fließen. An einer oberen Seite der Umhausung 12 sind die Gebläse 8, 11 so angeschlossen, dass von der ersten Verbindung 9c durch das Wärmerad 7 eine Fließverbindung zu der Druckseite des Frischluftgebläses 8 besteht und von der zweiten Verbindung 10c durch das Wärmerad 7 eine Fließverbindung zu der Saugseite des Abluftgebläses 11. Die Umhausung 12 ist wärmeisoliert.

Das Wärmerad 7 ist auf bekannte Art ausgebildet. Es umfasst eine zentrische Welle, an der radiale Begrenzungsstege befestigt sind; an seinem Außenumfang ist das Wärmerad von einem Ring umschlossen, der an den Begrenzungsstegen befestigt ist. Das Wärmerad 7 ist an seinem Außenumfang in der Umhausung 12 gestützt. Zwischen den Begrenzungsstegen und dem Ring ist Material befestigt, das günstige Eigenschaften in Bezug auf Wärmeaufnahme, -speicherung und -abgabe aufweist. Die Welle ist drehbar gelagert und mit einem Antrieb verbunden. Dem Wärmerad 7 ist eine Reinigungsvorrichtung zugeordnet, die z.B. mit Druckluft und/oder Wasser mit hohem Druck betreibbar ist. Die Umhausung 12 weist eine Ablaufleitung für Kondensat aus der Abluft und für Reinigungsflüssigkeit auf.

Um Wartungs- und besondere Reinigungsarbeiten durchführen zu können, sind Mittel zum mindestens einseitigen Anheben des Wärmerads 7 einschließlich der Umhausung 12 angeordnet.

Die Gebläse 8, 11 sind in unmittelbarer Nähe des Wärmerads 7 angeordnet, so dass hier nur kurze Leitungen erforderlich sind.

Im Betrieb wird die Warenbahn 3 mittels der Transportketten durch die Kammern 2 des Spannrahmens 1 transportiert. In den Kammern 2 wird im Umluftverfahren geführtes und gleichmäßig temperiertes Behandlungsgas, hier Luft, auf die Warenbahn aufgeblasen. In jeder der Kammern 2 mit Ausnahme der ersten 2.1 wird eine vorbestimmte Menge Abluft in den zweiten Kanal 10 abgezogen. Eine entsprechende Zuluftmenge wird aus einer der Kammern 2 abgezogen, die in der Transportrichtung direkt vorgeordnet ist. Der ersten Kammer 2.1 wird die Frischluft zugeführt.

Die Abluft wird mit dem Abluftgebläse 11 durch das Wärmerad 7 aus dem zweiten Kanal 10 abgesaugt. In dem Wärmerad 7, das um die Welle drehend angetrieben wird, gibt die Abluft einen wesentlichen Teil seiner Wärme an das Material des Wärmerads 7 ab, die hier gespeichert wird. Die so abgekühlte Abluft wird durch den Kamin nach außen abgeleitet.

Das Frischluftgebläse 8 saugt Umgebungsluft als Frischluft an und fördert sie durch das Wärmerad 7 und den ersten Kanal 9 in die erste Kammer 2. Die Frischluft nimmt hierbei aus dem Wärmerad 7 die Wärme auf und wird so vorgewärmt.

Weil das Wärmerad 7 gedreht wird, werden stetig dessen von der Abluft erwärmte Segmente in den von der Frischluft durchströmten Bereich gebracht, während die von der Frischluft gekühlten Segmente in den von der Abluft durchströmten Bereich gelangen. Auf diese Weise erfolgt eine effektive Wärmeübertragung von der Abluft auf die Frischluft.

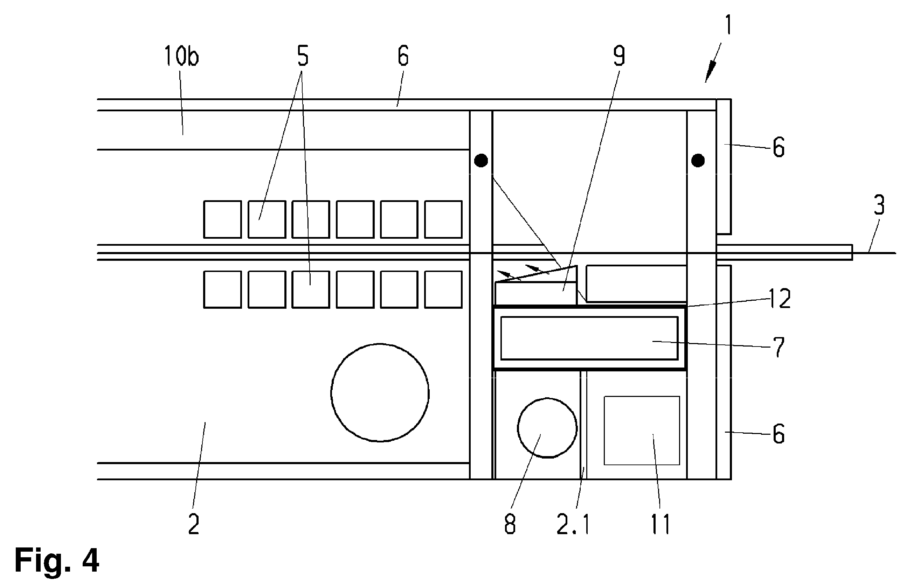

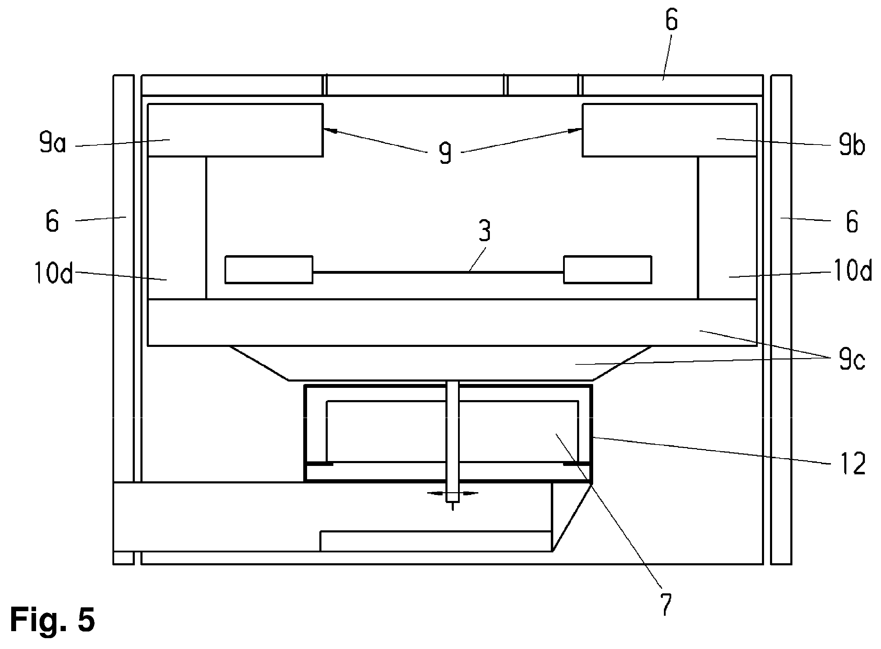

Ein zweites Ausführungsbeispiel, das aus den Figuren 4 und 5 ersichtlich ist, unterscheidet sich von dem ersten um Folgendes:
Das Wärmerad 7 ist in der ersten Kammer 2.1 und innerhalb des Gehäuses 6 unterhalb der Warenbahn 3 angeordnet.

Der erste Kanal 9 ist hier lediglich als die erste Verbindung 9c ausgeführt, die unmittelbar über dem Wärmerad 7 auf der Umhausung 12 angeordnet ist, sich über eine Breite der Warenbahn 3 erstreckt und Düsenöffnungen zum Aufblasen der vorgewärmten Frischluft auf die Warenbahn 3 aufweist. Die ersten Teilkanäle 9a, 9b entfallen hier. Das Frischluftgebläse 8 ist unterhalb des Wärmerads 7 angeordnet. Ein Saugstutzen führt von dem Frischluftgebläse 8 zu einem Durchlass in dem Gehäuse 6.

Die zweite Verbindung 10c des zweiten Kanals 10 ist parallel neben der ersten Verbindung 9c auf der Umhausung 12 angeordnet. Jeder der zweiten Teilkanäle 10a, 10b ist mittels eines im Wesentlichen vertikalen Stutzens 10d, der ebenfalls Bestandteil des zweiten Kanals 10 ist, an die zweite Verbindung 10c angeschlossen. Das Abluftgebläse 11 ist neben dem Frischluftgebläse 8 unterhalb des Wärmerads 7 angeordnet. Ein Druckstutzen des Abluftgebläses 11 führt zu dem Kamin. Ein Teil des Druckstutzens ist als Wanne zum Auffangen und Ableiten von Kondensat und Reinigungsflüssigkeiten mit einem Abfluss ausgebildet.

Bei einem dritten Ausführungsbeispiel sind zwei Wärmeräder 7, zwei Frischluftgebläse 8, zwei erste Kanäle 9 und zwei Abluftgebläse 11 angeordnet. Ein erstes der Wärmeräder 7 ist wie oben beschrieben im Bereich der ersten und der zweiten Kammer 2 auf dem Gehäuse 6 oder in der ersten Kammer 2.1 in dem Gehäuse 6 angeordnet. Ein zweites der Wärmeräder 7 ist im Wesentlichen spiegelsymmetrisch im Bereich einer vorletzten und einer letzten der Kammern 2 angeordnet.

Ein zweiter der ersten Kanäle 9 ist entsprechend dem der ersten Kammer 2.1 in der letzten Kammer 2.6 ausgebildet. Der zweite Kanal 10 weist an seinen beiden Enden die Verbindung 10c auf.

Im Betrieb wird die in den Wärmerädern 7 vorgewärmte Frischluft separat mittels der beiden Frischluftgebläse 8 in die erste Kammer 21 und in die letzte Kammer 2.6 gefördert. Die Abluft wird in vorbestimmtem Verhältnis auf die beiden Wärmeräder 7 verteilt.

## Patentansprüche

1. Vorrichtung zur Wärmebehandlung einer textilen Warenbahn, umfassend ein Gehäuse (6), Mittel zum Führen der Warenbahn (3) in dem Gehäuse (6), Mittel zum Aufblasen von erwärmtem Behandlungsgas auf die Warenbahn (3), wobei ein erster Kanal (9) zum Zuführen von Frischluft, die zumindest Teil des Behandlungsgases ist, und wobei ein zweiter Kanal (10) zum Ableiten von Abgas angeordnet ist, und mindestens ein Wärmerad (7) zur Vorwärmung der Frischluft mittels des Abgases, wobei das Wärmerad (7) unmittelbar an warme Seiten der Kanäle (9, 10) für die Frischluft und für das Abgas angeschlossen ist, wobei die warmen Seiten der Kanäle (9, 10) ausschließlich innerhalb des Gehäuses (6) geführt sind.

2. Vorrichtung nach Anspruch 1, **dadurch gekennzeichnet, dass** jeder der Kanäle (9, 10) in zwei beabstandete Teilkanäle (9a, 9b, 10a, 10b) unterteilt ist, die an den Enden, wo der erste Kanal (9) und der zweite Kanal (10) benachbart sind, separat für jeden der Kanäle (9, 10) U-förmig verbunden sind.

3. Vorrichtung nach Anspruch 2, **dadurch gekennzeichnet, dass** das Wärmerad (7) unmittelbar an den Verbindungen (9c, 10c) der Kanäle (9, 10) angeordnet ist, wobei die Verbindungen (9c, 10c) zu dem Wärmerad (7) hin offen und dichtend an dessen Umhausung (12) angeschlossen sind.

4. Vorrichtung nach einem der Ansprüche 1 bis 3, **dadurch gekennzeichnet, dass** der erste Kanal (9) einer ersten Kammer (2.1) der Vorrichtung zugeordnet ist.

5. Vorrichtung nach einem der Ansprüche 1 bis 4, **dadurch gekennzeichnet, dass** das Wärmerad (7) oberhalb der Warenbahn (3) im Bereich einer Decke des Gehäuses (6) angeordnet ist.

6. Vorrichtung nach einem der Ansprüche 1 bis 4, **dadurch gekennzeichnet, dass** das Wärmerad (7) unterhalb der Warenbahn (3) innerhalb des Gehäuses (6) angeordnet ist.

7. Vorrichtung nach einem der Ansprüche 1 bis 6, **dadurch gekennzeichnet, dass** das Wärmerad (7) um eine senkrechte Welle drehbar gelagert ist.

## Claims

1. Device for heat treating a textile web, comprising a housing (6), means for guiding the web (3) in the housing (6), means for inflating heated treatment gas on the web (3), wherein a first channel (9) for supplying fresh air, forming at least part of the treatment gas, and wherein a second channel (10) for venting waste gas is arranged, and at least one hot wheel (7) for pre-heating the fresh air by means of the waste gas, wherein the hot wheel (7) is directly connected to hot sides of the channels (9, 10) for the fresh air and for the waste gas, wherein the hot sides of the channels (9, 10) are routed only inside the housing (6).

2. Device according to claim 1, **characterised in that** each of the channels (9, 10) is divided into two spaced part channels (9a, 9b, 10a, 10b), connected separately for each of the channels (9, 10) in a U-shaped way at the ends where the first channel (9) and the second channel (10) are adjacent to each other.

3. Device according to claim 2, **characterised in that** the hot wheel (7) is arranged directly at the connections (9c, 10c) of the channels (9, 10) wherein the connections (9c, 10c) are open towards the hot wheel (7) and sealingly connected at its enclosure (12).

4. Device according to one of the claims 1 to 3, **characterised in that** the first channel (9) is associated with a first chamber (2.1) of the device.

5. Device according to one of the claims 1 to 4, **characterised in that** the hot wheel (7) is arranged above the web (3) in the area of the ceiling of the housing (6).

6. Device according to one of the claims 1 to 4, **characterised in that** the hot wheel (7) is arranged below the web (3) inside the housing (6).

7. Device according to one of the claims 1 to 6, **characterised in that** the hot wheel (7) is mounted to rotate around a vertical shaft.

## Revendications

1. Dispositif pour le traitement thermique d'une bande textile, comprenant :
un boîtier (6),
des moyens pour le guidage de la bande (3) dans le boîtier (6),
des moyens pour l'insufflation de gaz de traitement réchauffé sur la bande (3),
dans lequel un premier canal (9) est agencé pour l'amenée d'air frais qui est au moins une partie du gaz de traitement, et dans lequel un second canal (10) est agencé pour la dérivation de gaz d'échappement,
et au moins une roue thermique (7) pour le préchauffage de l'air frais à l'aide du gaz d'échappement, dans lequel la roue thermique (7) est raccordée directement à des côtés chauds des canaux (9, 10) pour l'air frais et pour le gaz d'échappement, dans lequel les côtés chauds des canaux (9, 10) sont guidés exclusivement dans le boîtier (6).

2. Dispositif selon la revendication 1, **caractérisé en ce que** chacun des canaux (9, 10) est divisé en deux canaux partiels espacés (9a, 9b, 10a, 10b) qui sont reliés en forme de U sur les extrémités où le premier canal (9) et le second canal (10) sont contigus, séparément pour chacun des canaux (9, 10).

3. Dispositif selon la revendication 2, **caractérisé en ce que** la roue thermique (7) est agencée directement sur les liaisons (9c, 10c) des canaux (9, 10), dans lequel les liaisons (9c, 10c) sont ouvertes vers la roue thermique (7) et raccordées de manière étanche sur son enceinte (12).

4. Dispositif selon l'une quelconque des revendications 1 à 3, **caractérisé en ce que** le premier canal (9) est associé à une première chambre (2.1) du dispositif.

5. Dispositif selon l'une quelconque des revendications 1 à 4, **caractérisé en ce que** la roue thermique (7) est agencée au-dessus de la bande (3) dans la zone d'un plafond du boîtier (6).

6. Dispositif selon l'une quelconque des revendications 1 à 4, **caractérisé en ce que** la roue thermique (7) est agencée sous la bande (3) dans le boîtier (6).

7. Dispositif selon l'une quelconque des revendications 1 à 6, **caractérisé en ce que** la roue thermique (7) est logée de manière rotative autour d'un arbre perpendiculaire.
